# EUROPEAN PATENT APPLICATION

(11) **EP 4 681 789 A1**
(43) Date of publication of application: **21.01.2026**
(21) Application number: 24770791.2
(22) Date of filing: 08.03.2024
(51) Int. Cl.: A63B 27/00, A41D 19/015, A43B 13/22, B25J 5/00, B64C 25/66, B64U 10/13, C09J 119/00, C09J 133/00, C09J 175/04

(54) **DETACHABLY ATTACHABLE STRUCTURE, METHOD FOR PRODUCING SAME, WALL SURFACE CLIMBING AID, ROBOT, AND CONVEYANCE AID**

(30) Priority: 15.03.2023 JP 2023041211
(71) Applicant: National Institute for Materials Science, Tsukuba-shi, Ibaraki 305-0047 (JP)
(72) Inventor: HOSODA, Naoe, Tsukuba-shi, Ibaraki 305-0047 (JP)
(74) Representative: V.O.
(86) International application number: PCT/JP2024/009105
(87) International publication number: WO 2024/190685

(57) **Abstract**

A detachably attachable structure (100) with respect to a target surface (21a) has a support body (10) having a facing side (11) and a back side (12), a plurality of detachable parts (20) detachably attached to the target surface (21a), a working part (30), and a buffer section (40) disposed between the detachable parts (20) and the working part (30). Each of the plurality of detachable parts (20) has an end portion on one side, which is a fixed end (20a) fixed to the support body (10), and an end portion on the other side, which is a movable end (20b) movable in a direction away from the support body using the fixed end as a shaft in an arrangement direction (y). The plurality of detachable parts (20) have at least two first skeletons (22, 22A, 22B) that connect the fixed end (20a) and the movable end (20b), and an adhesive film (21) supported by the first skeletons.

## Description

### TECHNICAL FIELD

The present invention relates to a detachably attachable structure and a method for producing the same, a wall surface climbing aid, a robot, and a conveyance aid.

Priority is claimed on Japanese Patent Application No. 2023-041211, filed March 15, 2023, the content of which is incorporated herein by reference.

### BACKGROUND ART

In the related art, various types of aids for humans or robots to climb wall surfaces (wall surface climbing aids) have been proposed using suction cups using a pressure difference, magnets, or the like. For example, the wall climbing jig, developed by Stanford University, has numerous wedge-shaped microscopic adhesive structures arranged on its contact surface, which provide adhesion to the wall surface and also allow for easy detachment (Non Patent Document 1). In addition, the Defense Advanced Research Projects Agency (DARPA) has proposed a device for climbing vertical walls (gloves) that combines an adhesive part, a suction cup, and a piston (Patent Document 2).

Meanwhile, in Patent Document 1, the inventor discloses an adhesive structure that mimics fly legs, which can be attached to and detached from an object without the use of a suction cup, a magnet, etc. Further, Patent Document 1 does not describe or suggest a wall surface climbing aid using this adhesive structure.

### CITATION LIST

### NON PATENT DOCUMENT

Non Patent Document 1: Journal of the Royal Society Interface, Volume 12, Issue 102, January 2015

### PATENT DOCUMENT

Patent Document 1: Japanese Patent No. 7195026 (B)
Patent Document 2: PCT International Publication No. 2017/184398 (A)

### SUMMARY OF INVENTION

### TECHNICAL PROBLEM

However, the wall surface climbing aids in the related art had the following problems. For example, suction cups that utilize pressure difference require a pressure reducing device, which increases costs and places a burden on a climber (or robot) when climbing. When using a magnet, the wall surface that can be used is limited to ferromagnetic materials or the like. In addition, the wall climbing jig disclosed in Non Patent Document 1 allows for easy detachment, but poses a safety issue since detachment occurs when the jig rises slightly upward. In addition, the device disclosed in Patent Document 2 utilizes a suction cup and is therefore limited to use on smooth surfaces.

The present invention is directed to solving the above-mentioned problems. The present invention is directed to providing a structure which does not require a driving device such as a pressure reducing device or the like, is able to be applied also to a wall surface (target surface) other than a ferromagnetic material or a smooth surface, provides a strong adhesive strength to a target surface, and is able to be simply detached, and a wall surface climbing aid using the structure, and the like.

### SOLUTION TO PROBLEM

As a result of extensive research into achieving the above-mentioned object, the inventor has found that the above-mentioned object can be achieved by the following configuration.
(1) A structure that is a detachably attachable structure with respect to a target surface, the structure having:
   a support body having a facing side disposed to face the target surface and a back side located on a side opposite to the facing side in a laminating direction crossing the target surface when the structure is adhered to the target surface;
   a plurality of detachable parts supported on the facing side of the support body and detachably attached to the target surface;
   a working part disposed to face the back side in the laminating direction; and
   a buffer section corresponding to at least one of the plurality of detachable parts and disposed between the corresponding at least one detachable part and the working part in the laminating direction,
   each of the plurality of detachable parts has an end portion on one side, which is a fixed end fixed to the support body, and an end portion on the other side, which is a movable end movable in a direction away from the support body using the fixed end as an axis, in an arrangement direction perpendicular to the laminating direction, and
   each of the plurality of detachable parts has:
      at least two first skeletons that connect the fixed end and the movable end; and
      an adhesive film supported by the first skeletons.
(2) The structure according to the above-mentioned (1), wherein each of the plurality of detachable parts further has at least one second skeleton that intersects with the at least two first skeletons.
(3) The structure according to the above-mentioned (1) or (2), wherein the buffer section is a gel.
(4) The structure according to the above-mentioned (3), wherein the buffer section is a urethane gel.
(5) The structure according to any one of the above-mentioned (1) to (4), wherein the adhesive film has an adhesive surface detachably attached to the target surface, and
   a width of the adhesive surface in a widthwise direction perpendicular to the laminating direction and the arrangement direction continuously increases to a predetermined position from the end portion on the one side toward the other side in the arrangement direction.
(6) The structure according to the above-mentioned (5), wherein a width of the adhesive surface in the widthwise direction continuously increases from an end portion on the one side to an end portion on the other side in the arrangement direction.
(7) The structure according to any one of the above-mentioned (1) to (6), wherein the adhesive film contains at least one selected from the group consisting of an acryl-based adhesive agent, a urethane-based adhesive agent, a rubber-based adhesive agent, and a silicone-based adhesive agent.
(8) The structure according to any one of the above-mentioned (1) to (7), wherein at least two first skeletons are fibers.
(9) The structure according to any one of the above-mentioned (1) to (8), wherein, in each of the plurality of detachable parts, the at least two first skeletons are bonded at the fixed end.
(10) The structure according to the above-mentioned (9), wherein the at least two bonded first skeletons form a shaft.
(11) The structure according to the above-mentioned (10), wherein the shafts provided in each of the plurality of detachable parts are parallel to each other.
(12) The structure according to any one of the above-mentioned (1) to (11), wherein the working part is provided with any one selected from the group consisting of gripping portions, gloves, shoes, mittens, bands, and hooks.
(13) A wall surface climbing aid having the structure according to any one of the above-mentioned (1) to (12).
(14) A robot having the structure according to any one of the above-mentioned (1) to (12), which is detachably attached to the target surface.
(15) The robot according to the above-mentioned (14), which is an unmanned aircraft having a plurality of rotor blades.
(16) A conveyance aid having the structure according to any one of the above-mentioned (1) to (12).
(17) A method for producing the structure according to any one of the above-mentioned (1) to (12), having:
   a process S1 of fixing at least two first skeletons, having first ends and second ends, to one surface of a temporary support body at the first ends with a predetermined interval therebetween and connecting the at least two first skeletons using at least one second skeleton to obtain a temporary support body with skeletons;
   a process S2 of immersing at least the first and second skeletons in a composition containing a pressure sensitive adhesive agent;
   a process S3 of extracting the temporary support body with skeletons from the composition to obtain a detachable part having a shaft formed by bonding the at least two first skeletons by surface tension of the composition and an adhesive film formed of the pressure sensitive adhesive agent supported by the first and second skeletons; and
   a process S4 of separating the detachable part from the temporary support body and then fixing the detachable part to the support body.
(18) An adhesive pad including:
   a support body;
   a plurality of small piece plate members provided on a first main surface perpendicular to a thickness direction of the support body;
   at least one elastic member provided between at least one of the plurality of small piece plate members and the first main surface; and
   a backing member perpendicular to a thickness direction of the support body and provided on the side of a second main surface opposite to the first main surface,
   wherein each of the plurality of small piece plate members includes a fixed end fixed to the first main surface and a movable end located on a side opposite to the fixed end and movable in a direction approaching or moving away from the first main surface, and
   each of the plurality of small piece plate members has at least two first skeletons that connect the fixed end and the movable end, and an adhesive film supported by the first skeletons.

### ADVANTAGEOUS EFFECTS OF INVENTION

A structure of the present invention has strong adhesive strength to a target surface such as a wall surface or the like, and enables simple detachment. In addition, no driving device such as a pressure reducing device is required, and it can be applied to a wall surface (target surface) other than a ferromagnetic material, a smooth surface, or the like.

### BRIEF DESCRIPTION OF DRAWINGS

[FIG. 1A] A photograph of a structure fabricated according to an example.
[FIG. 1B] A photograph of the structure shown in FIG. 1A captured from a facing side of a support body.
[FIG. 2A] A front view of the structure of the embodiment.
[FIG. 2B] A cross-sectional view along line 2B-2B of the structure shown in FIG. 2A, showing also a target surface that is a target to be bonded.
[FIG. 2C] A partially enlarged view of detachable parts.
[FIG. 3] A schematic view showing an aspect in which the structure of the embodiment is used as a wall surface climbing aid.
[FIG. 4] A photograph showing an example of the structure of the embodiment.
[FIG. 5] A flowchart showing a method for producing the structure of the embodiment.
[FIG. 6A] A view for describing an example of a method for producing detachable parts (adhesive film: triangular shape).
[FIG. 6B] A view for describing another example of the method for producing detachable parts (adhesive film: triangular shape).
[FIG. 6C] A view for describing another example of the method for producing detachable parts (adhesive film: triangular shape).
[FIG. 6D] A view and a photograph for describing an example of the method for producing detachable parts (adhesive film: diamond shape).
[FIG. 6E] A view and a photograph for describing an example of the method for producing detachable parts (adhesive film: diamond shape).
[FIG. 6F] A view and a photograph for describing an example of the method for producing detachable parts (adhesive film: diamond shape).
[FIG. 6G] A view and a photograph for describing an example of the method for producing detachable parts (adhesive film: diamond shape).
[FIG. 6H] A view and a photograph for describing an example of the method for producing detachable parts (adhesive film: heart shape).
[FIG. 6I] A view and a photograph for describing an example of the method for producing detachable parts (adhesive film: heart shape).
[FIG. 6J] A view and a photograph for describing an example of the method for producing detachable parts (adhesive film: heart shape).
[FIG. 6K] A view and a photograph for describing an example of the method for producing detachable parts (adhesive film: heart shape).
[FIG. 7A] A view for describing a part of a method for producing the structure.
[FIG. 7B] A cross-sectional view along line 7B-7B of a third unit shown in FIG. 7A.
[FIG. 7C] A view for describing another part of the method for producing the structure.
[FIG. 8] A view showing an aspect in which the structure of the embodiment is used as a conveyance aid.

### DESCRIPTION OF EMBODIMENTS

Hereinafter, the present invention will be described in detail.

The following description of the configuration elements may be based on representative embodiments of the present invention, but the present invention is not limited to such embodiments.

Further, in the specification, a range expressed using "to" means a range that includes the numbers before and after "to" as a lower limit value an upper limit value.

### <Structure 100>

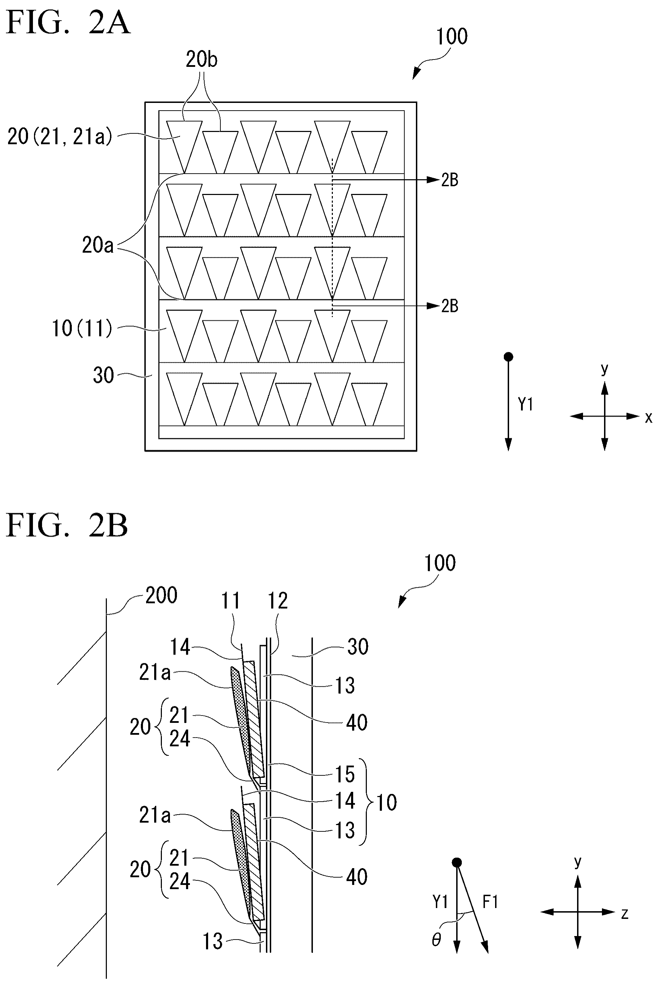

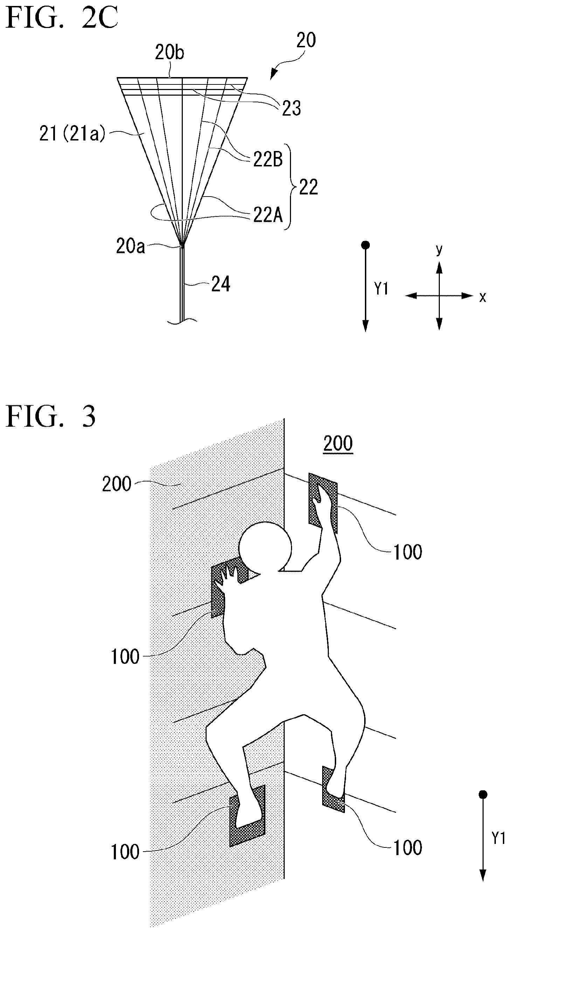

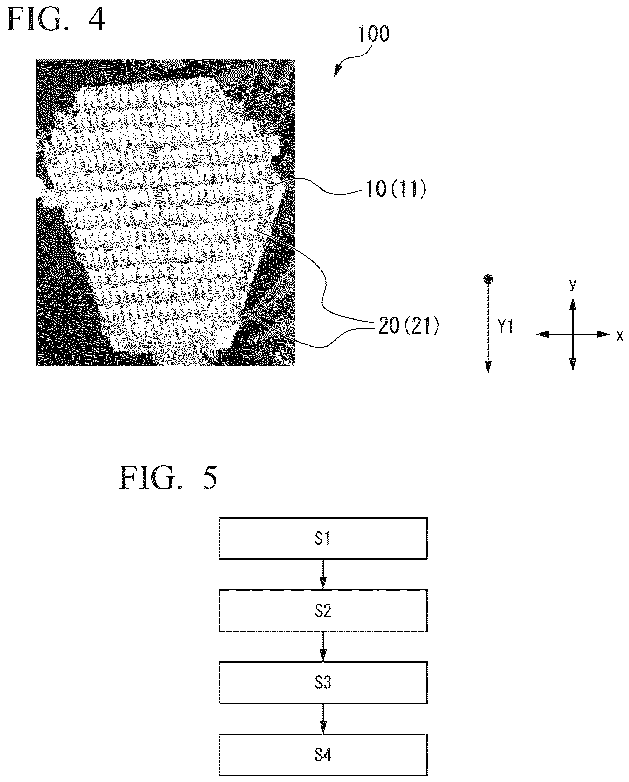

A structure 100 (adhesive pad) of the embodiment is detachably attached to a target surface 200 (for example, wall surface) (see FIG. 3). As shown in FIG. 2A to FIG. 2C, and FIG. 4, the structure 100 has a support body 10, a plurality of detachable parts 20 (plurality of small piece plate members) supported on the support body 10 detachably attached to the target surface 200, a working part 30, and a buffer section 40 corresponding to at least one of the plurality of detachable parts 20. In the following description, when the structure 100 is adhered to the target surface 200, a direction crossing the target surface 200 (a z direction shown in FIG. 2B, a direction perpendicular to the drawings of FIG. 2A and FIG. 2C) is defined as "a laminating direction (a thickness direction of a support body)," a direction perpendicular to the laminating direction is defined as "an arrangement direction" (a y direction shown in FIG. 2A to FIG. 2C), and a direction perpendicular to the laminating direction and the arrangement direction is defined as "a widthwise direction" (an x direction shown in FIG. 2A and FIG. 2C). Hereinafter, each of components of the structure 100 will be described.

### <Support body 10>

The support body 10 has a facing side 11 (a first main surface side described below), and a back side 12 (a second main surface side described below) located on an opposite side to the facing side 11 in a laminating direction (z direction). The shape and size (thickness, area of the facing side 11 and the back side 12, etc.) of the support body 10 are not particularly limited, and can be designed appropriately depending on the application of the structure 100. For example, the support body 10 may be in the form of a flat plate or sheet, or may be in a three-dimensional shape with a curved surface, or may be in a shape that combines these. In addition, the support body 10 may be a cloth such as fabric (textile), nonwoven fabric, knitting, etc., and may be a single-layered body or a multi-layered body (laminated body). When the support body 10 is made of cloth, it becomes easy to align the plurality of detachable parts 20 and fix them onto the support body 10 by sewing or the like. In addition, it is preferable that the support body 10 have softness and/or flexibility so that it can easily follow unevenness (surface roughness), curvature, etc. of the target surface 200.

The first main surface perpendicular to the thickness direction of the support body 10 can also be interpreted as the facing side 11, and the second main surface perpendicular to the thickness direction of the support body 10 and opposite the first main surface can also be interpreted as the back side 12.

The material of the support body 10 is not particularly limited, and examples thereof include organic materials, inorganic materials, and composite materials thereof. The organic material is not particularly limited, but may be a resin. Examples of the resins include polyester resins such as polyamide resin (for example, Nylon), polyethylene resin, and polyethylene terephthalate (PET), or the like, polycarbonate resin, (meta)acryl resin, epoxy resin, polyurethane resin, polyolefin resin, cellulose derivatives, silicone resins, polyvinyl alcohol (PVA), and the like. The support body 10 may be a foam of these resins. In addition, when using cloth for the support body 10, the material is not particularly limited, but natural fibers (for example, cotton, hemp, silk, animal hair such as wool, etc.), synthetic fibers (for example, the above-mentioned resin such as Nylon, etc.,), or blended cloth of these can be used. The support body 10 may be made of a single material or a plurality of materials.

### <Detachable parts 20>

The plurality of detachable parts 20 are supported on the facing side 11 of the support body 10. The detachable parts 20 have a fixed end 20a fixed to the support body 10, and a movable end 20b configured to be movable (for example, pivotable) in a direction away from the support body 10 using the fixed end 20a as a shaft. Each of the plurality of detachable parts 20 is capable of flapping movement (flapping) on the facing side 11 of the support body 10, with the fixed end 20a as a fulcrum.

The fixed end 20a is an end portion on one side in the arrangement direction (y direction), and the movable end 20b is an end portion on the other side in the arrangement direction. Disposition of the plurality of detachable parts 20 is not particularly limited, but is not randomly arranged, as described above, they are arranged with directionality along one direction (the arrangement direction y), with the fixed end 20a facing one side in the arrangement direction and the movable end 20b facing the other side in the arrangement direction.

Each of the plurality of detachable parts 20 has at least two first skeletons 22 that connect the fixed end 20a and the movable end 20b, and an adhesive film 21 supported on the first skeletons 22. When there are two first skeletons 22, they are disposed at both ends of the adhesive film 21 in the widthwise direction (x direction) (22A in FIG. 2C). When there are three first skeletons 22, one or more the first skeletons 22B are provided between the first skeletons 22A on both ends. The number of the first skeletons 22 is not particularly limited as long as it is two or more, and may be designed based on the intended use of the structure 100, etc., but from the viewpoint of increasing the strength of the detachable parts 20, it is preferable to have three or more first skeletons 22, for example, 3 to 30. In addition, the first skeletons 22 may be straight, curvilinear, or a combination thereof.

As shown in FIG. 2C, in each of the plurality of detachable parts 20, the plurality of first skeletons 22 may be joined at the fixed end 20a and may be joined to form a shaft 24. With such a structure, the plurality of detachable parts 20 can be produced efficiently. In addition, in order to prevent the detachable parts 20 from coming off the structure 100 due to repeated attachment and detachment of the structure 100, it is preferable that the attached shaft 24 is fixed to the support body 10. For example, when a laminated body of cloth is used as the support body 10, the shaft 24 may be folded between the layers of the laminated body, and then, the shaft 24 may be sewn to the support body 10. In addition, the shafts 24 are fixed to the support body 10 while extending in the arrangement direction (y direction), and it is preferable that the plurality of shafts 24 are approximately parallel to each other.

The plurality of detachable parts 20 may use materials similar to the "structure" disclosed in Patent Document 1, which the inventor has previously filed. For example, the first skeletons 22 of this embodiment may be made of a material similar to the flexible material constituting the shaft member of Patent Document 1, and the adhesive film 21 of this embodiment may be made of a material similar to the adhesive portion in Patent Document 1. The contents of Patent Document 1 are incorporated herein by reference.

The first skeletons 22 of this embodiment are preferably fiber (textile). In addition, the fiber (textile) is preferably a flexible material. Accordingly, the fiber is deformed to fit the surface shape of the target surface 200, demonstrating excellent adhesive strength. In this specification, the flexible material is a material that is elastically deformable due to the stress caused by crimping onto the target surface 200 (for example, a solid surface). In other words, whether the material has flexibility can be defined by whether it is elastically deformable in relationship to the stress required for initial adhesion between the detachable parts 20 and the target surface 200. Since the detachable parts 20 have skeletons made of a flexible material, when the detachable parts 20 are adhered to the target surface 200, the skeletons deform in accordance with the surface structure of the target surface 200. For this reason, the detachable parts 20 have good tracking ability. In addition, a repulsive force of the skeletons makes it easier for the adhesive film 21 to be pressed against the target surface 200, resulting in the detachable parts 20 having better adhesiveness to the target surface 200.

Examples of the fibers include Nylon textile (tensile strength 4.2 to 5.6 cN/dtex, growth rate 28 to 45%), polyethylene textile (tensile strength 4.4 to 7.9 cN/dtex, elongation 8 to 35%), polyester textile (tensile strength 4.6 to 7.3 cN/dtex, elongation 11 to 43%), acryl textile (tensile strength 2.2 to 4.4 cN/dtex, elongation 25 to 50%), and the like. The first skeletons 22 may consist of a single material or two or more types of material.

The adhesive film 21 of this embodiment preferably contains a pressure sensitive adhesive agent, for example, an acrylic-based adhesive agent, a urethane-based adhesive agent, a rubber-based adhesive agent, a silicon-based adhesive agent, and the like. The adhesive film 21 may be made of a single material, or may be made of two or more types of materials.

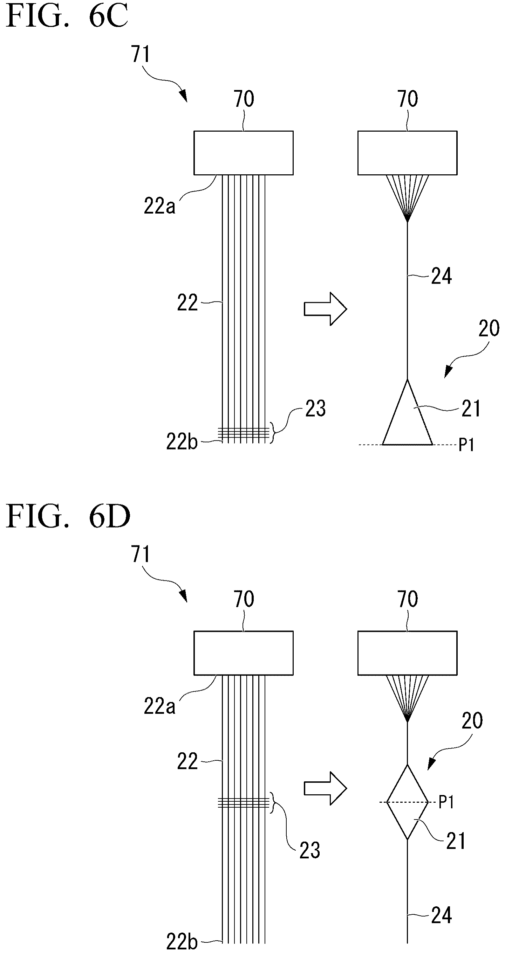

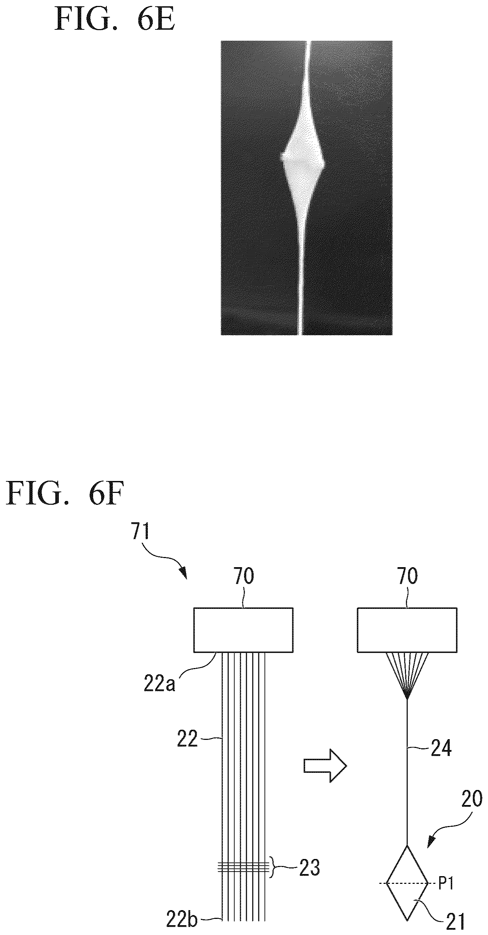

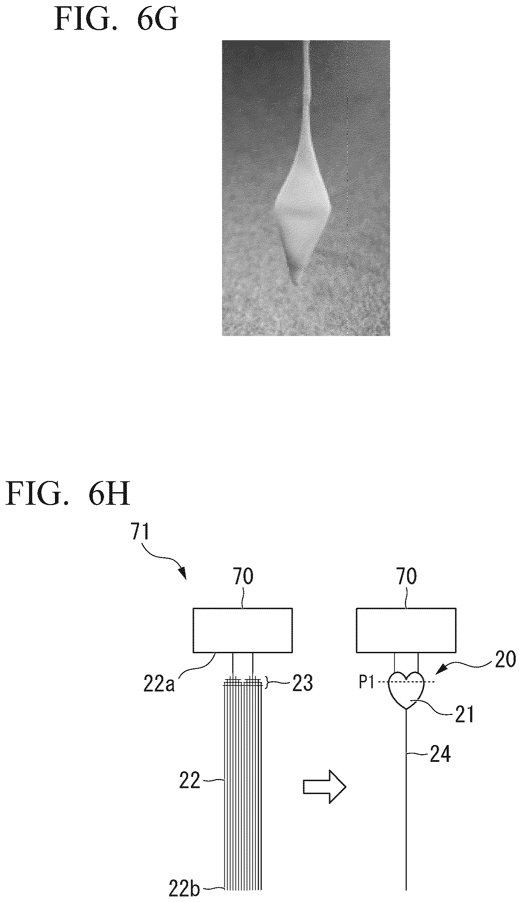

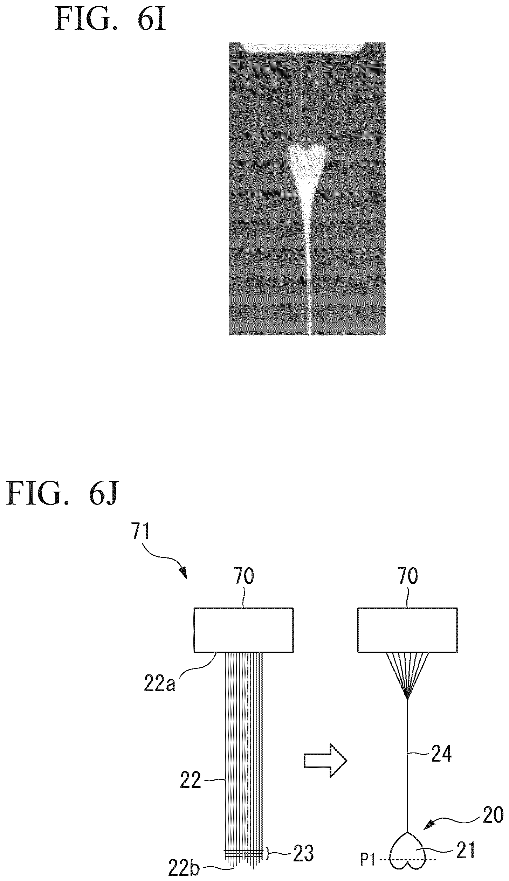

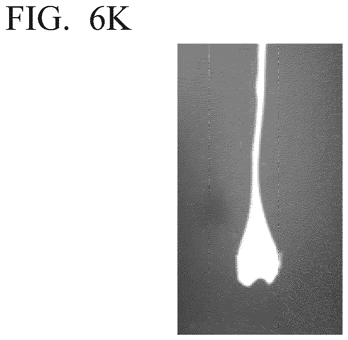

The detachable parts 20 preferably further have at least a single second skeleton 23 that intersects with the first skeletons 22. The second skeleton 23 can use the same material as that of the first skeletons 22. By providing the second skeleton 23, the strength of the detachable parts 20 can be further improved, and at the same time, a degree of freedom of the shape of the adhesive film 21 can be increased. For example, as will be described in more detail later, the presence of the second skeleton 23 enables efficient fabrication of the adhesive film 21 into shapes such as a diamond shape, a heart shape, or the like (see FIG. 6D to FIG. 6K). While the number of the second skeletons 23 is not particularly limited and may be designed based on the intended use of the structure 100, for example, it may be 1 to 10.

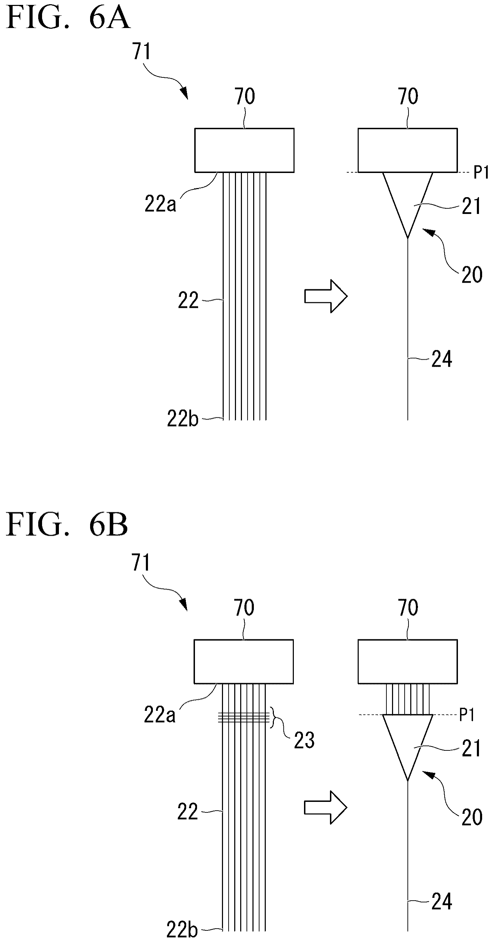

The adhesive film 21 has an adhesive surface 21a that is detachable from the target surface 200. The shape of the adhesive surface 21a is not particularly limited, but it is preferable that the width in the widthwise direction (x direction) continuously increases from an end portion on one side in the arrangement direction (y direction) to a predetermined position toward the other side (for example, to P1 shown in FIG. 6A to FIG. 6K). When the adhesive surface 21a is detached from the target surface 200, peeling starts from an end portion on one side in the arrangement direction (y direction) where the fixed end 20a exists. By reducing the width of the end portion on one side of the adhesive surface 21a in the arrangement direction (y direction), detachment (peeling) can be achieved with less force. In addition, by continuously increasing the area along the arrangement direction, the area of the adhesive surface 21a can be maintained, thereby maintaining high adhesive strength. Examples of the shape of such an adhesive surface 21a include a triangular shape (spatula shape), a fan shape, a trapezoidal shape, a semicircular shape, a circular shape, a polygonal shape such as a diamond shape or the like, a heart shape, and the like (see FIG. 6A to FIG. 6K). In order to further enhance the effect, it is more preferable that the width of adhesive surface 21a in the widthwise direction (x direction) increases continuously from an end portion on one side to an end portion on the other side in the arrangement direction (y direction). Examples of the shape such an adhesive surface 21a include a triangular shape (spatula shape), a fan shape, a trapezoidal shape, a semicircular shape, and the like.

Further, the fixed end 20a may be provided on the adhesive film 21 or the shaft 24. When the fixed end 20a is provided on the adhesive film 21, the entire shaft 24 is fixed to the support body 10, and only the adhesive film 21 is configured to be movable. Meanwhile, when the fixed end 20a is provided on the shaft 24, a part of the shaft 24 extending closer to the adhesive film 21 than a fixed end 24a (hereinafter, referred to as "a part of the movable shaft 24") is not fixed to the support body 10 and is movable together with the adhesive film 21. However, if a part of the movable shaft 24 is too long, there is a risk of increasing variation in waviness, direction, or the like, between the plurality of adhesive surfaces 21a. In the arrangement direction (y direction), it is preferable that the length (L1) of the part of the movable shaft 24 is sufficiently shorter than the length (L2) of the adhesive film 21. For example, a ratio (L1/L2) is preferably 0 to 0.5.

The size (thickness, width, etc. of the adhesive film 21) and the number of the detachable parts 20 are not particularly limited and can be designed appropriately depending on the application of the structure 100, and may be within the following ranges, for example, a width of the adhesive surface 21a (a maximum width in the x direction): 1 mm to 20 mm, a thickness of the adhesive film 21: 0.1 mm to 5 mm, a thickness of the first skeletons 22: 50 µm to 600 µm, a thickness of the second skeleton 23: 50 to 600 µm, a thickness of the shaft 24: 0.1 mm to 5 mm, and the number of the detachable parts 20 provided on the support body 10: 1 to 300.

### <Working part 30>

The working part 30 (backing member (backing)) is disposed to face the back side 12 of the support body in the laminating direction (z direction). The working part 30 is a part that applies (acts on) a force to the plurality of detachable parts 20 when the structure 100 is attached to or detached from the target surface 200 and/or while the structure 100 is adhered to the target surface 200. From the viewpoint of efficiently transmitting the force to the plurality of detachable parts 20, when viewed from the laminating direction (z direction), it is preferable that the working part 30 has a plate-shaped body arranged to cover all of the detachable parts 20. The material of the working part 30 (typically a plate-shaped body) is not particularly limited, but may be various types of plastic (resin, polymer), wood, paper (for example, cardboard), metal, or the like. The working part 30 preferably further includes gripping portions (handles), gloves, shoes, mittens, Tabi socks, bands, and hooks, or the like, depending on the intended use of the structure 100. Since the working part 30 is the part to which a force is applied from the outside, it is preferable that the working part 30 is disposed at the outermost side in the laminating direction (z direction) of the structure 100 (at the position farthest from the target surface 200 in the z direction when the structure 100 is adhered to the target surface 200).

### <Buffer section 40>

The buffer section 40 (elastic member) is a member having softness and/or elasticity corresponding to at least one of the plurality of detachable parts 20. The buffer section 40 is disposed between the corresponding detachable part 20 and the working part 30 in the laminating direction z. When the structure 100 is adhered to the target surface 200, a pressing force is applied from the working part 30 towards the detachable part 20, i.e., towards the target surface 200, via the buffer section 40, and the adhesive surface 21a is adhered to the target surface 200. Here, by providing the buffer section 40, the adhesive surface 21a of the detachable part 20 can be sufficiently adhered to the target surface 200.

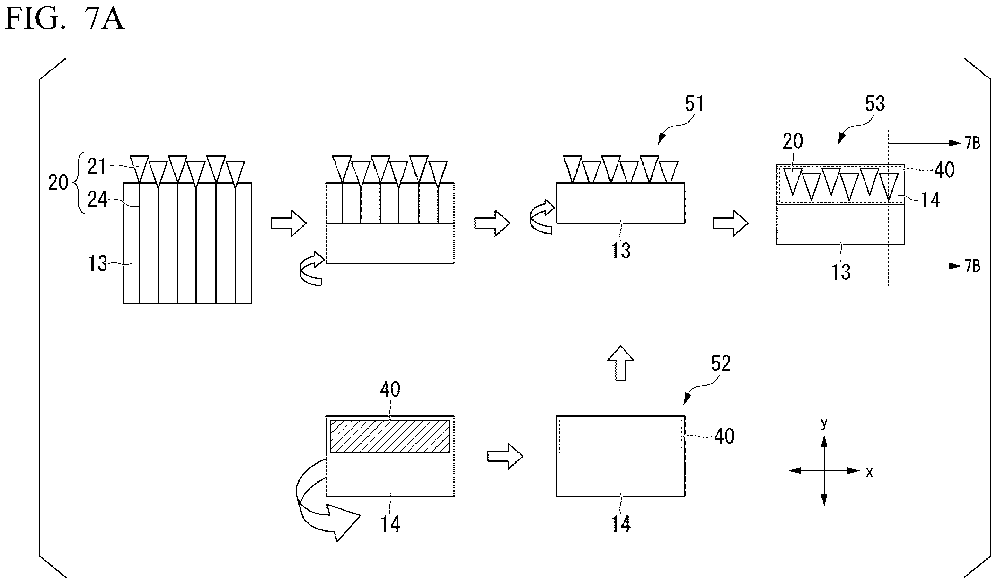

The buffer section 40 is disposed between the corresponding detachable part 20 and the working part 30 in the laminating direction z, and other positions are not particularly limited. For example, as shown in FIG. 2B, the buffer section 40 may be incorporated inside the support body 10, which is a laminated body (between the layers of the laminated body). In addition, the buffer section 40 may be located between the corresponding detachable part 20 and the facing side 11 of the support body 10, or may be disposed between the back side 12 of the support body 10 and the working part 30. In addition, the number of the detachable parts 20 corresponding to one buffer section 40 is not particularly limited, and for example, as shown in FIG. 7A, one buffer section 40 may correspond to the plurality of detachable parts 20 (in FIG. 7A, six detachable parts 20). In addition, the plurality of buffer sections 40 may be provided to correspond to the plurality of detachable parts 20, respectively, or a one common buffer section 40 may be provided to correspond to all of the detachable parts 20.

The material of the buffer section 40 is not particularly limited as long as it has softness and/or elasticity, but examples include rubber, foam, gel, and other resin (polymer) materials, with gel being preferred. Examples of the gel include urethane gel, silicone gel, or the like. From the viewpoint of obtaining higher adhesiveness, the buffer section 40 is preferably urethane gel, and the Asker C hardness is 0 to 15, or preferably 0 to 7.

The size of the buffer section 40 is not particularly limited, but from the viewpoint of having high adhesiveness, it is preferable that the size (area) is large enough to cover all of the corresponding detachable parts 20 when viewed from the laminating direction z, and the thickness in the laminating direction z is, for example, 0.1 to 10 mm, preferably 0.5 mm to 2 mm.

### <Other components>

The structure 100 of the embodiment may be constituted by only the support body 10, the plurality of detachable parts 20, the working part 30, and the buffer section 40, and may include other members within the scope of the effects of the present invention. For example, a reinforcement configured to increase the strength of the structure 100 may be provided between the support body 10 and the working part 30.

### <Target surface 200>

The shape of the target surface 200 to which the material is to be adhered is not particularly limited. From the viewpoint of obtaining stronger adhesive strength, a flat surface is preferable. However, the structure of this embodiment, unlike conventional devices that use suction cups (wall surface climbing aids), has the buffer section 40 and therefore exhibits sufficient adhesive strength even against the target surface 200, which has a certain degree of unevenness (surface roughness) and curvature. In addition, the material of the target surface 200 is also not particularly limited. For example, unlike conventional magnet-based devices (wall surface climbing aids), it can be applied on the target surface 200 other than ferromagnetic materials.

### <Effects of structure 100>

As described above, in Patent Document 1, the inventor discloses an adhesive structure that mimics fly legs. In the embodiment, the detachable parts 20 correspond to the adhesive structure that mimics fly legs in Patent Document 1. A direction of a force applied to the detachable parts 20 when the detachable parts 20 are adhered to the target surface 200 (for example, a gravity applied to a moving body (human, robot) when the structure 100 is used as the wall surface climbing aid) is shown as a direction F1 in FIG. 2B. Further, an arrow (F1) in FIG. 2B indicates only the direction of the force, and the length of the arrow has no relationship to the magnitude of the force.

When the detachable parts 20 are adhered to the target surface 200, as the direction of force F1 becomes closer to a direction Y1 from the movable end 20b toward the fixed end 20a of the detachable parts 20, the adhesive strength of the adhesive surface 21a against the target surface 200 becomes stronger. The direction Y1 is parallel to an arrangement direction Y. Here, the smaller of the angles between the direction Y1 and the direction of force F1 is set as an angle θ. When the angle θ is, for example, 10° or less, or 0° (i.e., the direction Y1 coincides with the direction F1), the adhesive surface 21a exhibits high adhesive strength relative to the target surface 200. Meanwhile, the angle θ exceeds, for example, 20 to 30°, the adhesive strength of the adhesive surface 21a against the target surface 200 is abruptly decreased. Accordingly, if high adhesive strength is desired, it is sufficient to apply force so that the angle θ is, for example, 10° or less, and on the other hand, if it is desired to detach the detachable part 20, it can be easily detached by applying force so that the angle θ is, for example, an angle exceeding 20 to 30°.

In order to apply the adhesive structure of Patent Document 1 (i.e., the detachable parts 20 of the embodiment) to a wall surface climbing aid for a human (or robot), it is necessary to increase the number of the detachable parts 20 and make them an assembly. However, simply increasing the number of detachable parts 20 did not result in the adhesive strength that should have been calculated for the assembly. The cause of this is presumably due to variations in the undulation, direction, etc. of the adhesive surface 21a between the detachable parts 20 that make up the assembly, resulting in variations in the adhesion state of the adhesive surface 21a to the target surface 200. Based on this assumption, the inventor conducted extensive research to eliminate the performance degradation of the detachable parts 20 that occurs during assembly, and arrived at the structure 100 of the embodiment having the configuration described above. Hereinafter, effects of the structure 100 of the embodiment will be described.

When the structure 100 is adhered to the target surface 200, the facing side 11 of the support body 10 faces the target surface 200 , and a force is applied from the working part 30 toward the target surface 200. Accordingly, the adhesive surface 21a is pressed against and adhered to the target surface 200. Here, the structure 100 of this embodiment has the buffer section 40, which absorbs variations such as undulation and direction between the plurality of adhesive surfaces 21a, and also absorbs the unevenness (surface roughness) of the target surface 200. Accordingly, variation in the adhesion state of the adhesive surface 21a relative to the target surface 200 is reduced, and adhesive strength is improved.

Further, since the plurality of detachable parts 20 of this embodiment are arranged along one direction (an arrangement direction y), it is possible to align (or suppress variation in) the direction of force F1 applied from the working part 30 to the plurality of detachable parts 20. In the detachable parts 20, an end portion on one side in the arrangement direction y is fixed to the support body 10 (the fixed end 20a), and an end portion on the other side is not fixed to the support body 10 (the movable end 20b). Further, in each of the detachable parts 20, the plurality of first skeletons 22 extend from the fixed end 20a toward the movable end 20b. In this way, by aligning and positioning the detachable parts 20 with directionality, the direction of force F1 applied from the working part 30 to the detachable parts 20 can be aligned. By aligning the direction of force F1 between the plurality of detachable parts 20, the structure 100 can exert greater adhesive strength as an assembly of adhesive structures, and at the same time, can be easily detached from the target surface 200.

In the embodiment, as shown in FIG. 2C, the plurality of first skeletons 22 are preferably joined at the fixed end 20a to form the shaft 24. By aligning the plurality of shafts 24 approximately parallel to each other and parallel to the arrangement direction y and fixing them to the support body 10, variations in undulation, direction, etc. between the adhesive surfaces 21a can be more efficiently suppressed, and further, the direction of force F1 applied from the working part 30 to the plurality of detachable parts 20 can be aligned.

In addition, since the detachable part 20 of the embodiment has the fixed end 20a and the movable end 20b, when the structure 100 is detached from the target surface 200, the adhesive surface 21a peels off from the target surface 200 so as to be rolled from the fixed end 20a toward the movable end 20b along the arrangement direction (y direction). Accordingly, further, the structure 100 can be detached from the target surface 200 with a smaller force.

### <Method for producing structure 100>

While a method for producing the structure 100 is not particularly limited, for example, the structure 100 may be produced by a producing method including the following processes S1 to S4 (see FIG. 5 to FIG. 7C).

(Process S1): Providing at least two first skeletons 22, each having a first end 22a and a second end 22b and fixing the first ends 22a on one surface of a temporary support body 70 at a predetermined interval to obtain a temporary support body 71 with skeletons.

(Process S2): Immersing at least the first skeletons in a composition containing a pressure sensitive adhesive agent.

(Process S3): Extracting the temporary support body 71 with skeletons from the composition to obtain the detachable part 20 having the shaft 24 formed by joining at least two first skeletons 22 using a surface tension of the composition and the adhesive film 21 formed of a pressure sensitive adhesive agent supported by the first skeletons 22.

(Process S4): Separating the detachable parts 20 from the temporary support body 70 and then fixing them to the support body 10.

(Process S1) to (Process S3): The detachable parts 20 can be produced using the same method as disclosed in Patent Document 1. This producing method was inspired by the bristle formation process of fly pupa, and after forming a framework with the first skeletons 22 (typically fibers), the composition is filled in and the structure can be created autonomously using the surface tension. This method is advantageous in that it allows easy fabrication of the structures with complex shapes at room temperature and pressure, and also allows fabrication of the structures at low cost. The contents of Patent Document 1 are incorporated herein by reference.

In the temporary support body 71, the plurality of first skeletons 22 may be connected by one or more second skeletons 23 (FIG. 6B to FIG. 6K). By adding the second skeleton 23, it is possible to prevent the first skeletons 22 from joining with each other in the vicinity of the second skeleton 23. As a result, the adhesive film 21 can be formed into complex shapes such as a diamond shape (FIG. 6D to FIG. 6G) or a heart shape (FIG. 6H to FIG. 6K), and at the same time, the strength of the adhesive film 21 can be increased. In addition, as can be seen from a comparison of FIG. 6A with FIG. 6B to FIG. 6C, by providing the second skeleton 23 to prevent the first skeletons 22 from bonding together, the adhesive film 21 can be formed at a position farther away from the temporary support body 70. Accordingly, contact between the temporary support body 70 and the composition containing the pressure sensitive adhesive agent, and contamination of the composition due to the contact, can be avoided.

(Process S4): The method for separating the detachable parts 20 from the temporary support body 70 is not particularly limited. The method for fixing the detachable parts 20 to the support body 10 is not particularly limited, but an example will be described below (see FIG. 7A to FIG. 7C).

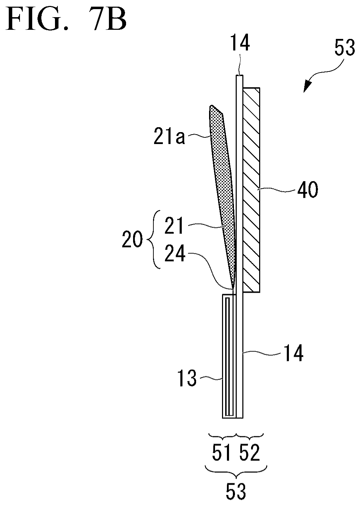

First, as shown in FIG. 7A, an adhesive agent or a gluing agent is applied to one surface of a first support member 13, and the plurality of detachable parts 20 are arranged on the one surface and temporarily fixed thereon. Here, the adhesive surfaces 21a of the plurality of adhesive films 21 are oriented parallel to one surface of the first support member 13. Then, the shafts 24 of the plurality of detachable parts 20 are arranged in parallel. Next, the first support member 13, to which the shaft 24 is temporarily attached, is folded together with the shaft 24 several times to obtain a first unit 51. Next, a buffer section (typically, gel) 40 is provided on one surface of a second support member 14 to obtain a second unit 52. The first unit 51 and the second unit 52 are bonded together with the other surface of the first support member 13 (the surface on which the detachable parts 20 are not attached) facing the other surface of the second support member 14 (the surface on which the buffer section 40 is not provided), and a third unit 53 is fabricated (see FIG. 7B). A plurality (a desired number) of the third units 53 are fabricated depending on the application of the structure 100.

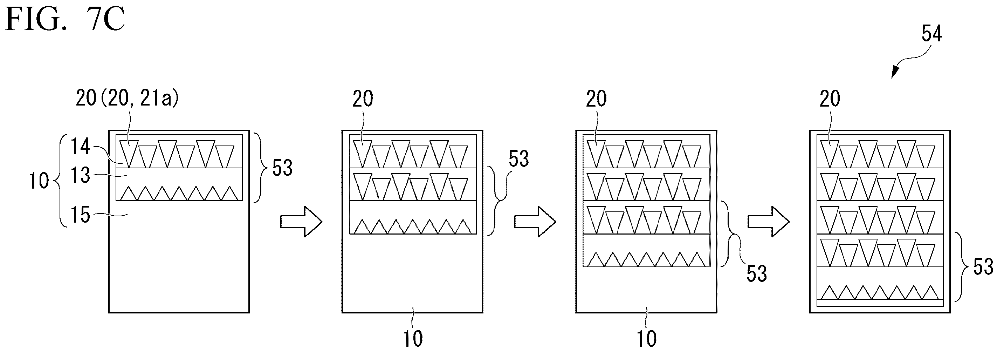

As shown in FIG. 7C, a third support member 15 is prepared, and the plurality of third units 53 are attached to one surface of the third support member 15 in such a manner that the adhesive surfaces 21a do not overlap. Accordingly, a support body 54 with detachable parts is obtained. The material of the first, second and third support members 13 to 15 is not particularly limited, but for example, if cloth is used, the detachable parts 20 can be easily fixed and the support members 13 to 15 can be easily connected to each other by sewing. In the embodiment, the support body 10 is a complex (laminated body) of the first, second and third support members 13 to 15, the buffer section 40 is disposed in the support body 10 (between the second support member 14 and the third support member 15), and the shaft 24 of the detachable part 20 is disposed in the support body 10 (folded together with the first support member 13).

The working part 30 is attached to the back side 12 of the support body 10 of the support body 54 with detachable parts, and the structure 100 of this embodiment is obtained.

### <Purpose of structure>

The structure 100 of this embodiment can be used in a variety of applications. For example, the structure 100 can be applied to a wall surface climbing aid, shown in FIG. 3, for use by a human or robot to climb a wall surface. The structure exhibits strong adhesive strength to the target surface 200 such as a wall surface and allows for easy detachment, making it suitable for application to heavy moving bodies. When used as the wall surface climbing aid, the structure 100 is adhered to a target surface (wall surface) 200 and used such that the direction Y1 from the movable end 20b of the detachable part 20 toward the fixed end 20a becomes a direction from top to bottom on the wall surface. By using it in this way, the difference between the load direction F1 and the load direction Y1 of the moving body (human or robot) becomes smaller (or coincides), and the structure 100 exhibits higher adhesive strength to the wall surface (the target surface 200). In addition, to secure a human or robot to the wall surface climbing aid (the structure 100) or to facilitate the human or robot's operation of the wall surface climbing aid, the working part 30 of the structure 100 may be provided with gripping portions, gloves, shoes, mittens, bands, and hooks, etc.

In addition, the structure 100 can be applied to a robot configured to be detachable from the target surface (for example, a wall surface) 200 that contains the structure 100 as a part. In the robot, the structure 100 is disposed with the adhesive surface 21a facing outward. Examples of the robots include a wall surface climbing robot and an unmanned aircraft (so-called drone) having a plurality of rotor blades.

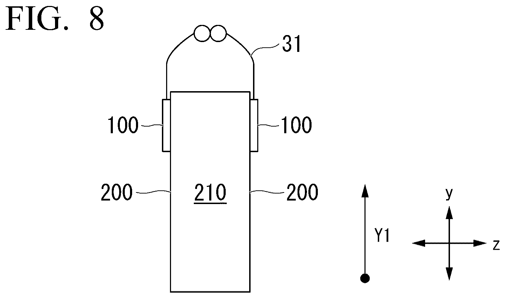

In addition, as shown in FIG. 8, the structure 100 can also be used as a conveyance aid for carrying a transport object 210. For example, two structures 100 each having a gripping portion (handle) 31 are prepared on the working part 30, and are attached to both surfaces (the target surface 200) of the transport object 210, respectively. In this state, the structures 100 have the gripping portions 31 and can transport the transport object 210 while hanging therefrom. Here, the structure 100 is attached to the target surface 200 and used such that the direction Y1 from the movable end 20b to the fixed end 20a of the detachable part 20 corresponds to a direction from the bottom to the top of the target surface 200. By using the structure 100 in this manner, the difference between the direction of force F1 and the direction Y1 transmitted from the gripping portion 31 to the detachable parts 20 is reduced (or coincident), and the structure 100 exhibits higher adhesive strength against the target surface 200.

### [Examples]

Hereinafter, the present invention will be described with reference to examples, but the present invention is not limited to these.

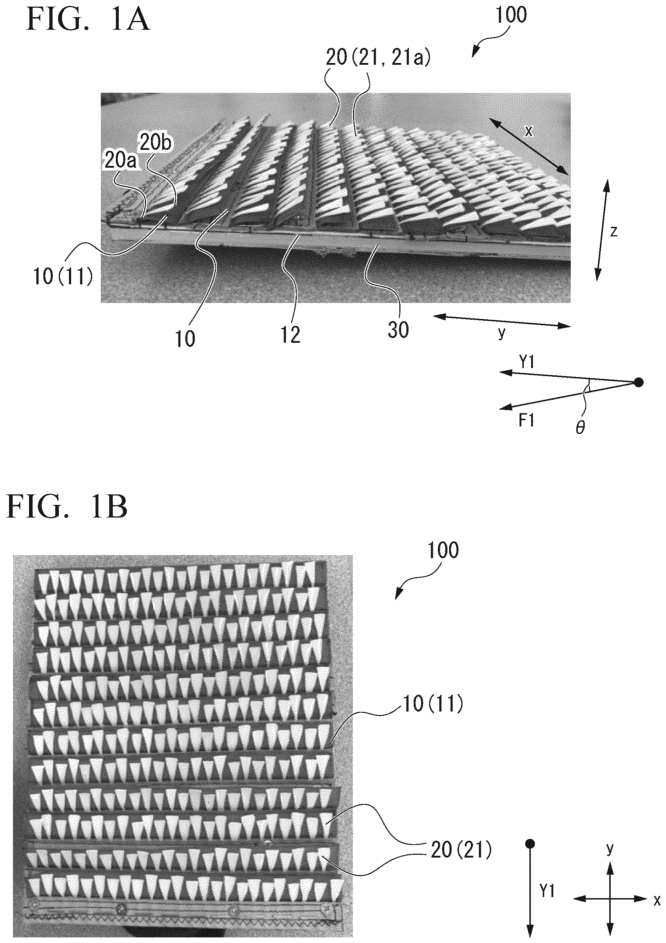

[Example 1] In this example, a wall surface climbing aid was fabricated using the structure 100 shown in FIG. 1A and FIG. 1B by the method described below. In FIG. 3, while this example shows the use of four pieces of the structure 100 as the wall surface climbing aid, one for each hand and foot, in this example, eight pieces of the structure 100 were fabricated as the wall surface climbing aid, two for the hands, two for the feet, two for the arms, and two for the knees.

### <Fabrication of detachable parts 20>

First, as shown in FIG. 6B to FIG. 6C, the upper ends (the first ends 22a) of the first skeletons 22 (25 pieces) were fixed to one surface of the temporary support body 70 with predetermined intervals between each other, and the first skeletons 22 were connected to each other by five second skeletons 23. Five sets of similar structures (the first skeletons 22: 25 pieces × 5 sets = total 125 pieces) were installed, and the temporary support body 71 with skeletons was fabricated. A paper (produced by Kokuyo Co., Ltd., Tuck Index, thickness 0.14mm, size 29mm×23mm) was used as the temporary support body 70, and Nylons (textile) with a diameter of 0.06mm and a length of 13cm were used as the first skeletons 22 and the second skeleton 23. The intervals between the first skeletons 22 (the intervals between the first ends 22a) of the same set (25 pieces) were set to 0.05 mm to 2 mm, and the intervals between adjacent sets were set to 10 mm to 20 mm.

Next, an acrylic resin solution (produced by Yutakamake Co., Ltd.) was used as the composition containing the pressure sensitive adhesive agent. The first skeletons 22 and the second skeleton 23 of the temporary support body 71 with skeletons were immersed in the composition and then immediately removed therefrom. Here, care was taken to ensure that the temporary support body 70 did not come into contact with the composition. The removed temporary support body 71 with skeletons had five detachable parts 20 formed therein, each having the shaft 24 formed by the 25 first skeletons 22 of the same set being bonded together by the surface tension of the composition, and the adhesive film 21 (triangular shape) made of the pressure sensitive adhesive agent supported by the first skeletons 22 and the second skeleton 23. This was placed on a flat polypropylene sheet at 50 degrees for 30 minutes to 2 days to harden the acrylic resin, and then the five detachable parts 20 were separated from the temporary support body 70, and the excess nylon textile (the first skeletons 22) was also cut off. The sizes of the obtained detachable parts 20 were as follows: An area of the adhesive surface (triangular shape) 21a: about 74 mm² (lateral width (bottom side) 7 mm×length (height) 18 mm×1/2), a thickness of the adhesive film 21: 0.3 mm to 2 mm, and a thickness of the shaft 24: 0.3 mm to 2 mm. The above-mentioned process was repeated to produce the required number of detachable parts 20.

### <Fabrication of aid for hands>

By the method shown in FIG. 7A to FIG. 7C, which has been explained in the embodiment, the fabricated detachable parts 20 were fixed to the support body 10 by sewing, and the support body 54 with detachable parts was fabricated. The support body 10 was made of the first support member 13, which was made of a bias tape of 65% polyester and 35% cotton (CAPTAIN Co., Ltd., width of 45 mm), the second support member 14, which was made of Nylon Taffeta (thickness of 0.1 mm), and the third support member 15, which was made of polyethylene foam (Clover Co., Ltd., thickness of 1.5 mm). Urethane gel (produced by Exseal Co., Ltd., thickness: 1 mm, Asker C hardness: 0) was used for the buffer section 40. The urethane gel was formed by creating a 1 mm high enclosure on one surface of the support member 14, pouring urethane resin into the enclosure and allowing it to gel, and then removing the enclosure after the gelation.

The aid for hands has the dimensions of the facing side 11 of the support body 10 (i.e., the size of the third support member 15) measuring 200 mm (x direction) × 234 mm (y direction), and has a total of 288 detachable parts 20 (24 pieces in the x direction) × (12 rows in the y direction).

The working part 30 (wooden board, 200 mm×234 mm×8 mm) was attached to the back side 12 of the support body 54 with detachable parts using a commercially available adhesive agent, to obtain the structure (wall surface climbing aid for hands) 100 of this example. Further, the working part 30 has mittens to facilitate fastening the wall surface climbing aid (the structure 100) to the climber.

### <Fabrication of aid for feet>

The wall surface climbing aid for feet has the dimensions of the facing side 11 of the support body 10 (i.e., the dimensions of the third support member 15) as 160 mm (x direction) × 160 mm (y direction), and has 133 detachable parts 20 attached thereto. Further, in order to make it easier to fix the wall surface climbing aid (the structure 100) to the climber, Tabi socks are provided on the working part 30. Otherwise, the wall surface climbing aid for feet was fabricated in the same manner as the wall surface climbing aid for hands.

### <Fabrication of aid for knees>

The wall surface climbing aid for knees has a dimension of the facing side 11 of the support body 10 (i.e., the dimension of the third support member 15) of 116 mm (x direction) × 126 mm (y direction), and has 84 detachable parts 20 attached thereto. Further, a band was provided on the working part 30 to make it easier to fix the wall surface climbing aid (the structure 100) to the climber. Otherwise, the wall surface climbing aid for knees was fabricated in the same manner as the wall surface climbing aid for hands.

### <Fabrication of aid for arms>

The wall surface climbing aid for arms has a dimension of the facing side 11 of the support body 10 (i.e., the dimension of the third support member 15) of 100 mm (x direction) × 145 mm (y direction), and has 84 detachable parts 20 attached thereto. Further, a band is provided on the working part 30 to make it easier to fix the wall surface climbing aid (the structure 100) to the climber. Otherwise, the wall surface climbing aid for arms was fabricated in the same manner as the wall surface climbing aid for hands.

[Calculation of peeling-off strength] When the detachable part 20 is adhered to the target surface 200 and a force in the direction F1 is applied to cause the detachable part 20 to detach from the target surface 200, the magnitude of this force is defined as the "peeling-off strength." When the angle θ between the direction Y1 (the direction from the movable end 20b to the fixed end 20a of the detachable part 20) and the direction of force F1 is 10° or less, the detachable parts 20 of this example exhibit a high peeling-off strength of an average of 6.5 N per piece against the target surface 200 of marble, as calculated. Similarly, for the wall surface climbing aid of Example 1 having the plurality of detachable parts 20, the peeling-off strength against a marble wall when the angle θ is 10° or less was calculated. The results are shown below.
For hands: 191 kgf
For feet: 88 kgf
For knees: 56 kgf
For arms: 56 kgf

The total peeling-off strength of the eight aids (two of each type) was 782 kgf. From calculations, it can be determined that the wall surface climbing aid in Example 1 has sufficient adhesive strength to assist the subject in climbing in the wall surface climbing experiment described below.

In addition, when the angle θ between the direction Y1 and the direction of force F1 is 90°, the peeling-off strength is calculated to be small value such as 1/10 to 1/100 of the peeling-off strength when the angle θ is 10° or less. From these results, it can be concluded that in the wall surface climbing experiment described below, a climber can easily detach the aid from the wall surface with little force, for example, by pulling the aid off in a direction approximately perpendicular to the wall surface.

[Wall surface climbing experiment] A subject (climber) (weight: about 50 kg) performed a wall surface climbing experiment wearing eight wall surface climbing aids fabricated in Example 1. The wall surface (target surface) 200 was a vertical marble surface. As shown in the schematic view of FIG. 3, the aid (structure) 100 was attached to the target surface (wall surface) 200 and used such that the direction Y1 from the movable end 20b to the fixed end 20a of the detachable parts 20 was a direction from the top to the bottom on the wall surface 200. The subject successfully climbed (moved upwards) 1.2 m up the wall surface 200 using the aid (structure) 100. The aid (structure) 100 was able to adequately support the subject's weight and adhere to the wall surface 200. Then, during the movement, the subject was able to easily detach the aid (structure) 100 from the wall surface 200 and move on the wall surface 200 while repeatedly attaching and detaching the aid.

### INDUSTRIAL APPLICABILITY

The structure of the present invention has strong adhesive strength to the target surface (wall surface) and allows for easy detachment (peeling-off). The structure can be applied to, for example, a wall surface climbing aid to enable a human or robot to climb a wall surface, a robot configured to be detachable from a target surface, a conveyance aid, etc.

### REFERENCE SIGNS LIST

10 Support body
11 Facing side
12 Back side
13 First support member
14 Second support member
15 Third support member
20 Detachable parts
20a Fixed end
20b Movable end
21 Adhesive film
21a Adhesive surface
22, 22A, 22B First skeletons
22a First end
22b Second end
23 Second skeleton
24 Shaft
30 Working part
31 Gripping portion (handle)
40 Buffer section
51 First unit
52 Second unit
53 Third unit
54 Support body with detachable parts
70 Temporary support body
71 Temporary support body with skeletons
100 Structure
200 Target surface
210 Transport object
z Laminating direction
y Arrangement direction
x Widthwise direction
F1 Direction of force
Y1 Direction from movable end toward fixed end when detachable parts are adhered to target surface
P1 Predetermined position in arrangement direction

## Claims

1. A structure that is a detachably attachable structure with respect to a target surface, the structure comprising:
a support body having a facing side disposed to face the target surface and a back side located on a side opposite to the facing side in a laminating direction crossing the target surface when the structure is adhered to the target surface;
a plurality of detachable parts supported on the facing side of the support body and to be detachably attached to the target surface;
a working part disposed to face the back side in the laminating direction; and
a buffer part corresponding to at least one of the plurality of detachable parts and disposed between the corresponding at least one detachable part and the working part in the laminating direction,
wherein each of the plurality of detachable parts has an end portion on one side is a fixed end fixed to the support body, and an end portion on the other side is a movable end movable in a direction away from the support body using the fixed end as an axis, in an arrangement direction perpendicular to the laminating direction, and
each of the plurality of detachable parts has:
at least two first skeletons that connect the fixed end and the movable end; and
an adhesive film supported by the first skeletons.

2. The structure according to claim 1, wherein each of the plurality of detachable parts further has at least one second skeleton that intersects with the at least two first skeletons.

3. The structure according to claim 1 or 2, wherein the buffer section is a gel.

4. The structure according to claim 3, wherein the buffer section is a urethane gel.

5. The structure according to any one of claims 1 to 4, wherein the adhesive film has an adhesive surface detachably attached to the target surface, and
a width of the adhesive surface in a widthwise direction perpendicular to the laminating direction and the arrangement direction continuously increases to a predetermined position from the end portion on the one side toward the other side in the arrangement direction.

6. The structure according to claim 5, wherein the width of the adhesive surface in the widthwise direction continuously increases from the end portion on the one side to the end portion on the other side in the arrangement direction.

7. The structure according to any one of claims 1 to 6, wherein the adhesive film contains at least one selected from the group consisting of an acryl-based adhesive agent, a urethane-based adhesive agent, a rubber-based adhesive agent, and a silicone-based adhesive agent.

8. The structure according to any one of claims 1 to 7, wherein the at least two first skeletons are fibers.

9. The structure according to any one of claims 1 to 8, wherein, in each of the plurality of detachable parts, the at least two first skeletons are bonded at the fixed end.

10. The structure according to claim 9, wherein the at least two bonded first skeletons form a shaft.

11. The structure according to claim 10, wherein the shafts provided in each of the plurality of detachable parts are parallel to each other.

12. The structure according to any one of claims 1 to 11, wherein the working part is provided with any one selected from the group consisting of gripping portions, gloves, shoes, mittens, bands, and hooks.

13. A wall surface climbing aid comprising the structure according to any one of claims 1 to 12.

14. A robot comprising the structure according to any one of claims 1 to 12, which is detachably attached to the target surface.

15. The robot according to claim 14, wherein an unmanned aircraft having a plurality of rotor blades.

16. A conveyance aid comprising the structure according to any one of claims 1 to 12.

17. A method for producing the structure according to any one of claims 1 to 12, the method comprising:
a process S1 of fixing at least two first skeletons, having first ends and second ends, to one surface of a temporary support body at the first ends with a predetermined interval therebetween and connecting the at least two first skeletons using at least one second skeleton to obtain a temporary support body with skeletons;
a process S2 of immersing at least the first and second skeletons in a composition containing a pressure sensitive adhesive agent;
a process S3 of extracting the temporary support body with skeletons from the composition to obtain a detachable part having a shaft formed by bonding the at least two first skeletons by surface tension of the composition and an adhesive film formed of the pressure sensitive adhesive agent supported by the first and second skeletons; and
a process S4 of separating the detachable part from the temporary support body and then fixing the detachable part to the support body.
